# EUROPEAN PATENT SPECIFICATION

(11) **EP 4 262 156 B1**
(45) Date of publication and mention of the grant of the patent: **26.03.2025**
(21) Application number: 21914605.7
(22) Date of filing: 30.12.2021
(51) Int. Cl.: H04L 12/46, H04L 41/0677, H04L 41/0686, H04L 45/02, H04L 45/122, H04L 45/00, H04L 45/24, H04L 45/28, H04L 45/50, H04L 43/0811, H04L 43/10, H04L 67/141

(54) **METHOD FOR DETECTING STATE OF BGP SESSION, APPARATUS AND NETWORK DEVICES**
VERFAHREN ZUR ERKENNUNG DES ZUSTANDS EINER BGP-SITZUNG, VORRICHTUNG UND NETZWERKVORRICHTUNGEN
PROCÉDÉ DE DÉTECTION D'ÉTAT DE SESSION BGP, APPAREIL ET DISPOSITIFS DE RÉSEAU

(30) Priority: 31.12.2020 CN 202011632592
(43) Date of publication of application: 18.10.2023
(73) Proprietor: Huawei Technologies Co., Ltd., Shenzhen, Guangdong 518129 (CN)
(72) Inventor: LI, Wenyan, Shenzhen, Guangdong 518129 (CN); WANG, Haibo, Shenzhen, Guangdong 518129 (CN); WANG, Lili, Shenzhen, Guangdong 518129 (CN); LI, Lei, Shenzhen, Guangdong 518129 (CN)
(74) Representative: Epping - Hermann - Fischer
(86) International application number: PCT/CN2021/142908
(87) International publication number: WO 2022/143874

(56) References cited:
- CN-A- 111 064 659
- CN-A- 111 385 165
- CN-A- 111 917 643
- CN-A- 112 104 557
- CN-A- 112 671 647
- US-A1- 2016 261 474
- US-A1- 2019 238 448
- US-B1- 9 680 694
- AKIYA BIG SWITCH NETWORKS C PIGNATARO D WARD CISCO SYSTEMS M BHATIA IONOS NETWORKS S PALLAGATTI N: "Seamless Bidirectional Forwarding Detection (S-BFD); draft-ietf-bfd-seamless-base-08.txt", SEAMLESS BIDIRECTIONAL FORWARDING DETECTION (S-BFD); DRAFT-IETF-BFD-SEAMLESS-BASE-08.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 24 February 2016 (2016-02-24), pages 1 - 21, XP015111668
- CISCO: "Using Seamless BFD with Segment Routing", 17 January 2019 (2019-01-17), XP093044990, Retrieved from the Internet <URL:https://www.cisco.com/c/en/us/td/docs/ios-xml/ios/seg_routing/configuration/xe-16-8/segrt-xe-16-8-book/sr-smlsbfd-sspf.pdf> [retrieved on 20230508]
- Z. ALI K. TALAULIKAR C. FILSFILS N. NAINAR C. PIGNATARO CISCO SYSTEMS: "Bidirectional Forwarding Detection (BFD) for Segment Routing Policies for Traffic Engineering; draft-ali-spring-bfd-sr-policy-05.txt", BIDIRECTIONAL FORWARDING DETECTION (BFD) FOR SEGMENT ROUTING POLICIES FOR TRAFFIC ENGINEERING; DRAFT-ALI-SPRING-BFD-SR-POLICY-05.TXT; INTERNET-DRAFT: SPRING, INTERNET ENGINEERING TASK FORCE, IETF; STANDARDWORKINGDRAFT, INTERNET SOCIETY (ISOC) 4, RUE , no. 05, 15 May 2020 (2020-05-15), Internet Society (ISOC) 4, rue des Falaises CH- 1205 Geneva, Switzerland , pages 1 - 11, XP015139565

## Description

### TECHNICAL FIELD

This application relates to the field of network communications technologies, and in particular, to a method and an apparatus for detecting a state of a border gateway protocol (border gateway protocol, BGP) session, and a network device.

### BACKGROUND

A BGP is a distance-vector routing protocol that makes a route between autonomous systems (autonomous systems, ASs) reachable and that is for selecting an optimal route. In the BGP routing protocol, after a first network device and a second network device establish a BGP session, the first network device and the second network device detect a link fault by using a slow hello (hello) packet mechanism, and a slow hello packet transmission interval is usually second-level. However, in a latency-sensitive network, a second-level detection fault cannot be accepted. In this case, bidirectional forwarding detection (bidirectional forwarding detection, BFD) is introduced. BFD can provide millisecond-level fault detection and implement fast link fault detection. Therefore, BGP and BFD are used together, so that the first network device and the second network device can quickly detect a link fault, to further enable BGP route convergence.

When BFD is used, usually after the BGP session is created, the first network device and the second network device both configure configuration parameters required for creating a BFD session, and create the BFD session. In this way, new configurations need to be added on both ends of the BGP session, and this consequently causes complex configurations.

The document "Seamless Bidirectional Forwarding Detection" from N. Akiya et al discloses a simplified mechanism to use Bidirectional Forwarding Detection (BFD) with large portions of negotiation aspects eliminated, thus providing benefits such as quick provisioning as well as improved control and flexibility to network nodes initiating the path monitoring.

The document "Using Seamless BFD with Segment Routing" from Cisco Systems describes Bidirectional Forwarding Detection (BFD) as a detection protocol designed to provide fast forwarding path failure detection times for all media types, encapsulations, topologies, and routing protocols.

US 2016/261474 A1 discloses a method, the method comprising: assigning a discriminator to a destination in communication with a reflector at a network device; identifying, at the reflector, a packet comprising the discriminator, the packet being transmitted from an initiator in a seamless bi-directional forwarding detection (S-BFD) session; and transmitting a response packet from the reflector to the initiator. The response packet includes information for the target obtained by the reflector by monitoring the target comprising a plurality of entities.

US 2019/238448 A1 discloses a method including: assigning, at a first network element, a first discriminator associated with a first discriminator identifier and assigning, at the first network element, a second discriminator associated with a second discriminator identifier, wherein the second discriminator is different from the first discriminator. The method also includes receiving, at the first network element, a seamless bidirectional forwarding detection (S-BFD) control packet sent from a second network element, wherein the S-BFD control packet includes one of the first discriminator identifier or the second discriminator identifier. The method further includes determining whether the first discriminator identifier or the second discriminator identifier is included in the S-BFD control packet. Based on the determination, the method includes initiating an S-BFD reflector session to transmit a response S-BFD control packet to the second network element along a return path determined based on whether the first discriminator identifier or the second discriminator identifier is included in the S-BFD control packet.

### SUMMARY

The present invention is defined by the independent claims. Embodiments labelled as inventive embodiments in the following, which are not covered by the scope of protection defined by the independent claims, are to be understood as examples helpful for understanding the invention, but not as embodiments of the invention. This application provides a method and an apparatus for detecting a state of a BGP session, and a network device, to simplify configurations of both ends of a BGP session when a state of the BGP session is detected.

According to a first aspect, this application provides a method for detecting a state of a BGP session, where the method is applied to a first network device, the first network device and a second network device have a BGP neighbor relationship, and the method includes:
the first network device creates a seamless bidirectional forwarding detection (Seamless Bidirectional Forwarding Detection, SBFD) session, where the SBFD session is an SBFD session corresponding to a BGP session between the first network device and the second network device, the first network device is an initiator of the SBFD session, the second network device is a reflector of the SBFD session, and the BGP session is a session created based on the BGP neighbor relationship; the first network device sends an SBFD packet to the second network device based on the SBFD session; and the first network device determines a state of the BGP session based on a state of feedback by the second network device for the SBFD packet.

In the solution shown in this application, the method for detecting a state of a BGP session is performed by the first network device, the first network device and the second network device have the BGP neighbor relationship, and the first network device and the second network create the BGP session corresponding to the BGP neighbor relationship. The first network device creates the SBFD session corresponding to the BGP session, where the SBFD session is an SBFD session between the first network device and the second network device. The first network device sends the SBFD packet to the second network device based on the SBFD session, where the SBFD packet is an SBFD control (control) packet or an SBFD echo (echo) packet. The first network device may determine the state of the BGP session based on the state of feedback by the second network device for the SBFD packet. In this way, because the reflector only needs to feed back an SBFD packet and does not need to create the SBFD session, content required for creating the SBFD session is configured on only the initiator, and does not need to be configured on the reflector, so that the configuration content can be reduced.

In a possible implementation, the first network device is a route reflector (route reflector, RR), and the second network device is a router; the first network device is a router, and the second network device is an RR; or both the first network device and the second network device are routers. In this way, the method for detecting a state of a BGP session may be applicable to a scenario including an RR and a scenario not including an RR.

In a possible implementation, a remaining processing capability of the first network device is not lower than a remaining processing capability of the second network device. In this way, a network device with a high remaining processing capability creates an SBFD session. Even if a processing resource is occupied, an impact on processing by the network device on a service packet is relatively small.

In a possible implementation, the method further includes: The first network device receives a configuration parameter that is of the SBFD session and that is statically configured for the BGP session. Alternatively, the first network device obtains neighbor information of the BGP session that is dynamically created, where the neighbor information includes a configuration parameter of the SBFD session, and the configuration parameter is a parameter used by the first network device to create the SBFD session. That the first network device creates an SBFD session includes: The first network device creates the SBFD session based on the configuration parameter.

In the solution shown in this application, the first network device may receive the configuration parameter that is of the SBFD session and that is statically configured for the BGP session, or the first network device obtains the neighbor information of the BGP session that is dynamically created, where the neighbor information includes the configuration parameter of the SBFD session. For example, configuration information includes an address of the second network device during creation of the BGP session. The first network device may create, by using the configuration parameter, the SBFD session corresponding to the BGP session. In this way, the configuration parameter used for creating the SBFD session may be obtained in a plurality of manners.

In a possible implementation, that the first network device determines a state of the BGP session based on a state of feedback by the second network device for the SBFD packet includes: The first network device receives an SBFD packet sent by the second network device. The first network device determines the state of the BGP session based on state information that is in the SBFD packet sent by the second network device.

In the solution shown in this application, when the first network device receives the SBFD packet sent by the second network device, the first network device may determine, by using the state information that is in the SBFD packet, a state indicated by the state information, and determine the state of the BGP session based on the state, so that the state of the BGP session can be accurately determined.

In a possible implementation, that the first network device determines a state of the BGP session based on a state of feedback by the second network device for the SBFD packet includes: if the first network device does not receive, within target duration, an SBFD packet looped back by the second network device based on the SBFD packet, determining that the state of the BGP session is disconnected; or if the first network device receives, within target duration, an SBFD packet looped back by the second network device based on the SBFD packet, determining that the state of the BGP session is connected.

In the solution shown in this application, after sending the SBFD packet to the second network device, if the first network device does not receive the SBFD packet looped back by the second network device for long time (for example, the target duration), the first network device may determine that the state of the BGP session is disconnected; or if the first network device receives the SBFD packet looped back by the second network device within the target duration, the first network device may determine that the state of the BGP session is connected. In this way, the state of the BGP session can be accurately determined depending on whether the SBFD packet looped back is received.

In a possible implementation, that the first network device sends an SBFD packet to the second network device based on the SBFD session includes: The first network device sends N SBFD packets to the second network device based on the SBFD session. That the first network device determines a state of the BGP session based on a state of feedback by the second network device for the SBFD packet includes: if a quantity of SBFD packets that are received by the first network device and that are looped back by the second network device based on the N SBFD packets is less than M, determining that the state of the BGP session is disconnected; or if a quantity of SBFD packets that are received by the first network device and that are looped back by the second network device based on the N SBFD packets is greater than or equal to M, determining that the state of the BGP session is connected, where M is less than or equal to N, and both M and N are positive integers.

In the solution shown in this application, the first network device may send the N SBFD packets to the second network device based on the SBFD session. The first network device determines a quantity of SBFD packets that are looped back by the second network device and that are in the N SBFD packets. If the quantity of SBFD packets looped back is less than M, the first network device may determine that the state of the BGP session is disconnected. If the quantity of SBFD packets looped back is greater than or equal to M, the first network device may determine that the state of the BGP session is connected. M is less than or equal to N, and both are positive integers. In this way, the state of the BGP session can be determined by using the SBFD packets looped back.

In a possible implementation, the first network device is directly connected to the second network device or is not directly connected to the second network device.

In a possible implementation, the method further includes: The first network device obtains a discriminator of the second network device. That the first network device sends an SBFD packet to the second network device based on the SBFD session includes: The first network device sends, based on the SBFD session, the SBFD packet including the discriminator to the second network device.

In the solution shown in this application, the first network device may obtain, from the second network device, the discriminator published by the second network device, or the discriminator may be statically configured on the first network device. When sending the SBFD packet to the second network device, the first network device sends the SBFD packet including the discriminator to the second network device. In this way, the discriminator may accurately indicate that the SBFD packet is sent to the second network device.

According to a second aspect, this application provides a method for detecting a state of a BGP session. The method is applied to a second network device, the second network device and a first network device establish a BGP neighbor relationship, and the method includes: The second network device receives a seamless bidirectional forwarding detection SBFD packet sent by the first network device based on an SBFD session, where the SBFD session is an SBFD session created by the first network device and is an SBFD session corresponding to a BGP session between the first network device and the second network device, the first network device is an initiator of the SBFD session, the second network device is a reflector of the SBFD session, and the BGP session is a session created based on the BGP neighbor relationship. The second network device performs feedback for the SBFD packet, so that the first network device determines a state of the BGP session based on a state of feedback by the second network device for the SBFD packet.

In the solution shown in this application, the second network device receives the SBFD packet sent by the first network device based on the SBFD session, where the SBFD session is the SBFD session created by the first network device, and is the SBFD session corresponding to the BGP session between the first network device and the second network device. The second network device may perform feedback for the SBFD packet. The first network device may determine the state of the BGP session based on the state of feedback by the second network device for the SBFD packet. In this way, the second network device only needs to feed back an SBFD packet, and is not the initiator of the SBFD session. Therefore, less SBFD content is configured, and configuration is simplified.

In a possible implementation, a remaining processing capability of the first network device is not lower than a remaining processing capability of the second network device. In this way, a network device with a high remaining processing capability creates an SBFD session. Even if a processing resource is occupied, an impact on processing by the network device on a service packet is relatively small.

In a possible implementation, that the second network device performs feedback for the SBFD packet includes: The second network device sends, to the first network device, an SBFD packet including state information, so that the first network device determines the state of the BGP session based on the state information, where a state indicated by the state information is a current state of the second network device.

In the solution shown in this application, after receiving the SBFD packet sent by the first network device, the second network device may determine the current state. The second network device sends, to the first network device, the SBFD packet including the state information, where the state indicated by the state information is the current state of the second network device. After receiving the SBFD packet, the first network device may determine the state of the BGP session based on the state information that is in the SBFD packet. In this way, the state of the BGP session may be determined based on the state information fed back by the second network device.

In a possible implementation, that the second network device performs feedback for the SBFD packet includes: The second network device loops back an SBFD packet to the first network device. In the solution shown in this application, after receiving the SBFD packet sent by the first network device, the second network device may directly loop back the SBFD packet sent by the first network device to the first network device. In this way, the first network device may determine the state of the BGP session by using the SBFD packet looped back.

In a possible implementation, the SBFD packet received by the second network device includes a discriminator of the second network device. That the second network device performs feedback for the SBFD packet includes: The second network device performs feedback for the SBFD packet based on the discriminator that is of the second network device and that is included in the SBFD packet.

In the solution shown in this application, the SBFD packet sent by the first network device includes the discriminator of the second network device. The second network device may determine whether the discriminator in the SBFD packet is a discriminator of the second network device. If the discriminator is the discriminator of the second network device, the second network device may determine that the SBFD packet is a packet for which feedback is to be performed, and performs feedback for the SBFD packet. In this way, feedback for the SBFD packet sent to the second network device can be accurately performed.

According to a third aspect, this application provides an apparatus for detecting a state of a BGP session. The apparatus is used in a first network device, the apparatus includes one or more modules, and the one or more modules are configured to implement the method according to the first aspect.

According to a fourth aspect, this application provides an apparatus for detecting a state of a BGP session. The apparatus is used in a second network device, the apparatus includes one or more modules, and the one or more modules are configured to implement the method according to the second aspect.

According to a fifth aspect, this application provides a network device. The network device includes a memory and a processor, and the memory is configured to store computer instructions. The processor executes the computer instructions stored in the memory, to implement the method according to the first aspect.

According to a sixth aspect, this application provides a computer-readable storage medium. The computer-readable storage medium stores computer program code. When the computer program code is executed by a network device, the network device implements the method in the first aspect, or a computing device is enabled to implement a function of the apparatus in the third aspect and the possible implementations of the third aspect.

According to a seventh aspect, this application provides a computer program product. The computer program product includes computer program code. When the computer program code is executed by a network device, the network device implements the method in the first aspect, or a computing device is enabled to implement a function of the apparatus in the third aspect and the possible implementations of the third aspect.

According to an eighth aspect, this application provides a network device. The network device includes a memory and a processor, and the memory is configured to store computer instructions. The processor executes the computer instructions stored in the memory, to implement the method according to the second aspect.

According to a ninth aspect, this application provides a computer-readable storage medium. The computer-readable storage medium stores computer program code. When the computer program code is executed by a network device, the network device implements the method in the second aspect, or a computing device is enabled to implement a function of the apparatus in the fourth aspect and the possible implementations of the fourth aspect.

According to a tenth aspect, this application provides a computer program product. The computer program product includes computer program code. When the computer program code is executed by a network device, the network device implements the method in the second aspect, or a computing device is enabled to implement a function of the apparatus in the fourth aspect and the possible implementations of the fourth aspect.

According to an eleventh aspect, this application provides a system for detecting a state of a BGP session. The system includes a first network device and a second network device. The first network device is the network device in which the apparatus in the third aspect is used, and the second network device is the network device in which the apparatus in the fourth aspect is used.

### BRIEF DESCRIPTION OF DRAWINGS

FIG. 1 is a schematic diagram of a structure of a first network device according to an example embodiment of this application;
FIG. 2 is a schematic diagram of a structure of a first network device according to an example embodiment of this application;
FIG. 3 is a schematic diagram of a structure of a second network device according to an example embodiment of this application;
FIG. 4 is a schematic diagram of a structure of a second network device according to an example embodiment of this application;
FIG. 5 is a schematic flowchart of a method for detecting a state of a BGP session according to an example embodiment of this application;
FIG. 6 is a schematic flowchart of a method for detecting a state of a BGP session according to an example embodiment of this application;
FIG. 7 is a schematic diagram of a direct connection between a first network device and a second network device according to an example embodiment of this application;
FIG. 8 is a schematic diagram of a non-direct connection between a first network device and a second network device according to an example embodiment of this application;
FIG. 9 is a schematic interaction diagram of detecting a state of a BGP session according to an example embodiment of this application;
FIG. 10 is a schematic diagram of an RR scenario for application according to an example embodiment of this application;
FIG. 11 is a schematic diagram of an RR scenario for application according to an example embodiment of this application;
FIG. 12 is a schematic diagram of a non-RR scenario for application according to an example embodiment of this application;
FIG. 13 is a schematic diagram of a structure of an apparatus for detecting a state of a BGP session according to an example embodiment of this application; and
FIG. 14 is a schematic diagram of a structure of an apparatus for detecting a state of a BGP session according to an example embodiment of this application.

### DESCRIPTION OF EMBODIMENTS

To make the objectives, technical solutions, and advantages of this application clearer, the following further describes implementations of this application in detail with reference to the accompanying drawings.

To facilitate understanding of embodiments of this application, the following first describes concepts of related nouns.
1. ABGP neighbor relationship refers to a BGP neighbor relationship between two network devices that establish a BGP session.
2. SBFD is a fast detection protocol. In SBFD, protocol packets are quickly and uninterruptedly advertised to achieve a detection purpose of reachability. In SBFD, there is an initiator and a reflector. The initiator can create an SBFD session. For details about SBFD, refer to RFC 7880. In a BGP routing protocol, a first network device and a second network device establish a BGP session, a BFD parameter is configured for both the first network device and the second network device, and the first network device creates a BFD session with the second network device by using the BFD parameter. Because BFD can provide millisecond-level fault detection, fast detection on a link fault can be implemented, so that the first network device and the second network device quickly perceive the link fault, to further enable BGP route convergence. However, because the BFD parameter needs to be configured on both ends of the BGP session, there is a large quantity of configuration content, and this is inconvenient for deployment, especially when BGP neighbors are from different carriers.

In some scenarios, when many BGP sessions are created on a network device (such as an RR), BFD occupies many resources on the network device, and occupies excessive resources especially on a device with poor performance. This may cause a systematic problem. For example, a packet cannot be normally forwarded.

Based on the foregoing problem, an embodiment of this application provides a method for detecting a state of a BGP session. The method for detecting a state of a BGP session may be implemented by an apparatus for detecting a state of a BGP session. The apparatus may be a hardware apparatus, namely, a first network device or a second network device. The first network device may be a router, a switch, or the like, and the second network device may also be a router, a switch, or the like. The apparatus may alternatively be a software apparatus, for example, may be a set of software programs running on a hardware apparatus.

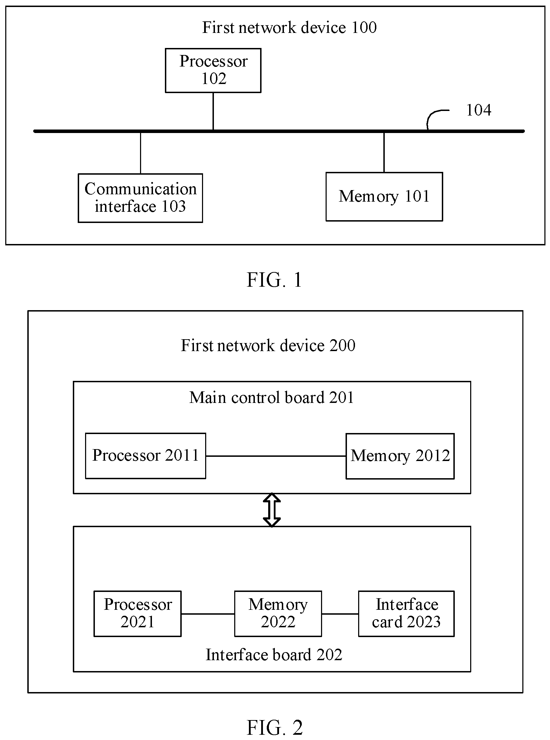

An embodiment of this application further provides a schematic diagram of a structure of a first network device. FIG. 1 is an example of a possible architectural diagram of a first network device 100.

The first network device 100 includes a memory 101, a processor 102, a communication interface 103, and a bus 104. The memory 101, the processor 102, and the communication interface 103 implement mutual communication connections through the bus 104.

The memory 101 may be a read-only memory (read-only memory, ROM), a static storage device, a dynamic storage device, or a random access memory (random access memory, RAM). The memory 101 may store a program. When the program stored in the memory 101 is executed by the processor 102, the processor 102 and the communication interface 103 are configured to perform a method for detecting a state of a BGP session. The memory 101 may further store data required or generated in a process of detecting a state of a BGP session, for example, store routing information.

The processor 102 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits.

The processor 102 in embodiments of this application may be an integrated circuit chip, and has a signal processing capability. In an implementation process, some or all functions of an apparatus for detecting a status of a BGP session in this application may be completed by using an integrated logic circuit of hardware in the processor 102 or instructions in a form of software. The foregoing processor 102 may be a general-purpose processor, a digital signal processor (digital signal processor, DSP), an application-specific integrated circuit, a field programmable gate array (field programmable gate array, FPGA) or another programmable logic device, a discrete gate or transistor logic device, or a discrete hardware component. The processor may implement or perform the method, steps, and logical block diagrams disclosed in the following embodiments of this application. The general-purpose processor may be a microprocessor, or the processor may be any conventional processor or the like. Steps of methods disclosed with reference to embodiments of this application may be directly executed and completed by using a hardware decoding processor, or may be executed and completed by using a combination of hardware and software modules in the decoding processor. The software module may be located in a mature storage medium in the field, such as a random access memory, a flash memory, a read-only memory, a programmable read-only memory, an electrically erasable programmable memory, or a register. The storage medium is located in the memory 101. The processor 102 reads information in the memory 101, and completes some functions of the apparatus for detecting a status of a BGP session in embodiments of this application in combination with hardware of the processor 102.

The communication interface 103 uses a transceiver module such as but not limited to a transceiver, to implement communication between the first network device 100 and another device or a communication network. For example, feedback for an SBFD packet may be received through the communication interface 103.

The bus 104 may include a channel for transmitting information between components (such as the memory 101, the processor 102, and the communication interface 103) of the first network device 100.

FIG. 2 is a schematic diagram of a structure of another first network device further provided in an embodiment of this application. A first network device 200 includes a main control board 201 and an interface board 202. The main control board 201 belongs to a control plane of the first network device 200, and the interface board 202 belongs to a data plane of the first network device 200. The main control board 201 includes a processor 2011 and a memory 2012. The interface board 202 includes a processor 2021, a memory 2022, and an interface card 2023. The main control board 201 and the interface board 202 establish a communication connection.

The processor 2011 may be a CPU, an ASIC, or the like. The processor 2011 may include one or more chips. The memory 2012 may be a ROM, a static storage device, a dynamic storage device, or a RAM. The memory 2012 may store computer instructions. When the computer instructions stored in the memory 2012 are executed by the processor 2011, the processor 2011 performs a method for detecting a state of a BGP session.

The processor 2021 may be a CPU, an ASIC, or the like. The processor 2021 may include one or more chips. The memory 2022 may be a ROM, a static storage device, a dynamic storage device, or a RAM. The memory 2022 may store computer instructions. When the computer instructions stored in the memory 2022 are executed by the processor 2021, the processor 2021 performs a method for detecting a state of a BGP session. The interface card 2023 may implement receiving and sending processing of an SBFD packet.

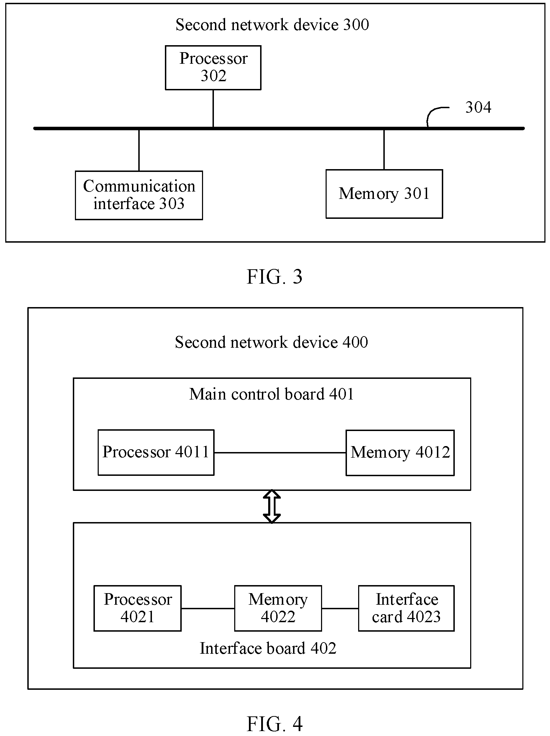

An embodiment of this application further provides a schematic diagram of a structure of a second network device. FIG. 3 is an example of a possible architectural diagram of a second network device 300.

The second network device 300 includes a memory 301, a processor 302, a communication interface 303, and a bus 304. The memory 301, the processor 302, and the communication interface 303 implement mutual communication connections through the bus 304.

The memory 301 may be a ROM, a static storage device, a dynamic storage device, or a RAM. The memory 301 may store a program. When the program stored in the memory 301 is executed by the processor 302, the processor 302 and the communication interface 303 are configured to perform a method for detecting a state of a BGP session. The memory 301 may further store data required or generated in a process of detecting a state of a BGP session, for example, store routing information.

The processor 302 may be a general-purpose CPU, a microprocessor, an ASIC, a GPU, or one or more integrated circuits.

The processor 302 in embodiments of this application may be an integrated circuit chip, and has a signal processing capability. In an implementation process, some or all functions of an apparatus for detecting a status of a BGP session in this application may be completed by using an integrated logic circuit of hardware in the processor 302 or instructions in a form of software. The foregoing processor 302 may be a general-purpose processor, a DSP, an application-specific integrated circuit, an FPGA or another programmable logic device, a discrete gate or transistor logic device, or a discrete hardware component. The processor may implement or perform the method, steps, and logical block diagrams disclosed in the following embodiments of this application. The general-purpose processor may be a microprocessor, or the processor may be any conventional processor or the like. Steps of methods disclosed with reference to embodiments of this application may be directly executed and completed by using a hardware decoding processor, or may be executed and completed by using a combination of hardware and software modules in the decoding processor. The software module may be located in a mature storage medium in the field, such as a random access memory, a flash memory, a read-only memory, a programmable read-only memory, an electrically erasable programmable memory, or a register. The storage medium is located in the memory 301. The processor 302 reads information in the memory 301, and completes some functions of the apparatus for detecting a status of a BGP session in embodiments of this application in combination with hardware of the processor 302.

The communication interface 303 uses a transceiver module such as but not limited to a transceiver, to implement communication between the second network device 300 and another device or a communication network. For example, feedback for an SBFD packet may be received through the communication interface 303.

The bus 304 may include a channel for transmitting information between components (such as the memory 301, the processor 302, and the communication interface 303) of the second network device 300.

FIG. 4 is a schematic diagram of a structure of another second network device further provided in an embodiment of this application. A second network device 400 includes a main control board 401 and an interface board 402. The main control board 401 belongs to a control plane of the second network device 400, and the interface board 402 belongs to a data plane of the second network device 400. The main control board 401 includes a processor 4011 and a memory 4012. The interface board 402 includes a processor 4021, a memory 4022, and an interface card 4023.

The main control board 401 and the interface board 402 establish a communication connection.

The processor 4011 may be a CPU, an ASIC, or the like. The processor 4011 may include one or more chips. The memory 4012 may be a ROM, a static storage device, a dynamic storage device, or a RAM. The memory 4012 may store computer instructions. When the computer instructions stored in the memory 4012 are executed by the processor 4011, the processor 4011 performs a method for detecting a state of a BGP session.

The processor 4021 may be a CPU, an ASIC, or the like. The processor 4021 may include one or more chips. The memory 4022 may be a ROM, a static storage device, a dynamic storage device, or a RAM. The memory 4022 may store computer instructions. When the computer instructions stored in the memory 4022 are executed by the processor 4021, the processor 4021 performs a method for detecting a state of a BGP session. The interface card 4023 may implement receiving and sending processing of an SBFD packet.

Before describing a procedure of a method for detecting a state of a BGP session, the following possible application scenarios are provided.

Scenario 1: The method for detecting a state of a BGP session is applied to an RR scenario. In the RR scenario, the first network device is an RR, and the second network device is a router or a switch; or the first network device is a router or a switch, and the second network device is an RR. Scenario 2: The method for detecting a state of a BGP session is applied to a non-RR scenario. In the non-RR scenario, the first network device is a router, and the second network device is a router; or the first network device is a switch, and the second network device is a switch.

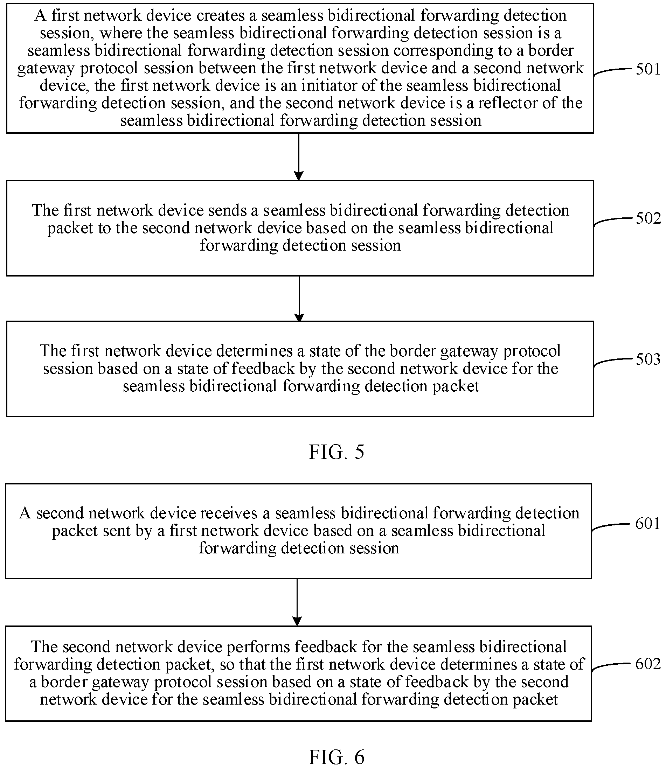

The following describes the method for detecting a BGP session according to an embodiment of this application with reference to FIG. 5. The method is performed by a first network device. As shown in FIG. 5, a processing procedure of the method is as follows.

Step 501: The first network device creates an SBFD session, where the SBFD session is an SBFD session corresponding to a BGP session between the first network device and a second network device, the first network device is an initiator of the SBFD session, and the second network device is a reflector of the SBFD session.

The first network device and the second network device have a BGP neighbor relationship, to be specific, the first network device is a BGP neighbor of the second network device, and the second network device is a BGP neighbor of the first network device. The first network device and the second network device establish the BGP session. The BGP session is a session created based on the BGP neighbor relationship.

In this embodiment, the first network device serves as the initiator of the SBFD session, and the second network device serves as the reflector of the SBFD session. The reflector does not have a mechanism for detecting a BGP session, and does not actively create an SBFD session. After the first network device and the second network device establish the BGP session, the first network device creates the SBFD session corresponding to the BGP session. Because the BGP session is between the first network device and the second network device, the SBFD session is the SBFD session corresponding to the BGP session between the first network device and the second network device. Meaning of correspondence between the SBFD session and the BGP session herein is that a binding relationship is established between the BGP session and the SBFD session, and a state of the BGP session may be detected based on the SBFD session. The state of the BGP session includes connected and disconnected.

Optionally, when creating the SBFD session corresponding to the BGP session, the first network device may further negotiate with the second network device for a minimum SBFD packet sending time interval supported by the first network device and the second network device and a minimum SBFD packet receiving time interval supported by the first network device and the second network device. Units of the sending time interval and the receiving time interval are both microsecond. Step 502: The first network device sends an SBFD packet to the second network device based on the SBFD session.

In this embodiment, after the first network device creates the SBFD session, when a condition for detecting the state of the BGP session is met, the first network device may send the SBFD packet to the second network device. The SBFD packet is an SBFD control packet or an SBFD echo packet.

Optionally, the condition for detecting the state of the BGP session is that the first network device detects that a periodicity for detecting the state of the BGP session is reached, or the first network device receives instructions that are for detecting the state of the BGP session and that are sent by a management node. Herein, the periodicity for detecting the state of the BGP session may be preset, and may be at a microsecond level, for example, 10 microseconds. Herein, the management node is configured to manage a network to which the first network device belongs, and the management node establishes a communication connection with the first network device.

When a link between the first network device and the second network device is normal, the second network device can receive the SBFD packet sent by the first network device, and may feed back an SBFD packet. When a link between the first network device and the second network device is faulty or the second network device is faulty, the second network device cannot receive the SBFD packet, and does not feed back an SBFD packet.

For example, the SBFD packet may be a packet in a user datagram protocol (user datagram protocol, UDP) format.

Step 503: The first network device determines the state of the BGP session based on a state of feedback by the second network device for the SBFD packet.

In this embodiment, each time the first network device sends the SBFD packet, the first network device determines the state of feedback by the second network device for the SBFD packet, and determines the state of the BGP session based on the state of feedback.

In addition, in some cases, the first network device may send the SBFD control packet and the SBFD echo packet to the second network device. The first network device determines the state of the BGP session based on a state of feedback by the second network device for the SBFD control packet and the SBFD echo packet.

The following describes a method for detecting a BGP session according to an embodiment of this application with reference to FIG. 6. The method is performed by a second network device. As shown in FIG. 6, a processing procedure of the method is as follows.

Step 601: The second network device receives an SBFD packet sent by a first network device based on an SBFD session.

The first network device and the second network device have a BGP neighbor relationship. The first network device and the second network device create a BGP session. The SBFD session is a session created by the first network device and is an SBFD session corresponding to the BGP session. The first network device is an initiator of the SBFD session, and the second network device is a reflector of the SBFD session.

In this embodiment, the second network device receives the SBFD packet sent by the first network device after the first network device creates the SBFD session.

Step 602: The second network device performs feedback for the SBFD packet, so that the first network device determines a state of the BGP session based on a state of feedback by the second network device for the SBFD packet.

In this embodiment, the second network device may perform feedback for the SBFD packet, and the first network device determines the state of the BGP session based on the state of feedback by the second network device for the SBFD packet.

In embodiments of this application, because the reflector only needs to feed back an SBFD packet and does not need to create the SBFD session, content required for creating the SBFD session is configured on only the initiator, and does not need to be configured on the reflector, so that the configuration content can be reduced.

Descriptions of the procedures shown in FIG. 5 and FIG. 6 are supplemented as follows.

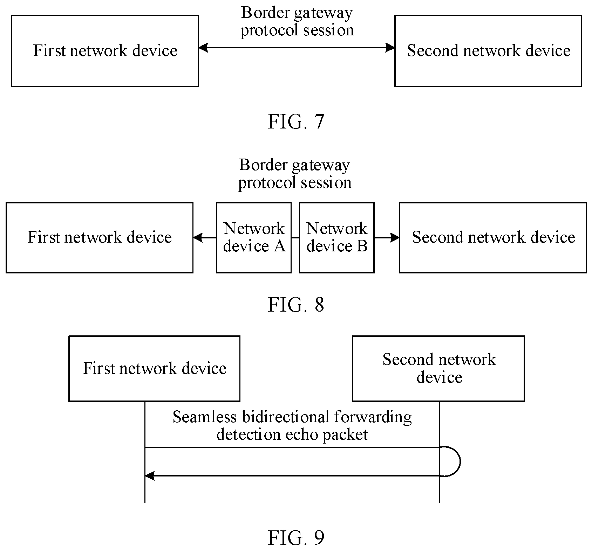

In a possible implementation, the first network device is directly connected to the second network device or is not directly connected to the second network device. For example, as shown in FIG. 7, there is no other network device on the link between the first network device and the second network device, and the first network device is directly connected to the second network device. As shown in FIG. 8, there are other network devices on the link between the first network device and the second network device, for example, a network device A and a network device B, and the first network device is not directly connected to the second network device. It should be noted that the network device A and the network device B in FIG. 8 are merely examples for description. In a non-direct connection case, a quantity of other network devices on the link between the first network device and the second network device is not limited in embodiments of this application. In a possible implementation, the first network device and the second network device may belong to a same AS, or may belong to different ASs.

In a possible implementation, creation of an SBFD session occupies a processing resource, and a network device with a high remaining processing capability creates the SBFD session, to be specific, a remaining processing capability of the first network device is not lower than a remaining processing capability of the second network device. In this way, the network device with the high remaining processing capability creates the SBFD session. Even if the processing resource is occupied, an impact on processing by the network device on a service packet is relatively small. For example, the remaining processing capability may be reflected based on a remaining CPU resource and/or a remaining memory. For example, a remaining CPU resource and a remaining memory that are of the first network device are weighted to obtain a first weighted value, and a remaining CPU resource and a remaining memory that are of the second network device are weighted to obtain a second weighted value. The first weighted value is not less than the second weighted value.

Optionally, a management node is disposed in the network, and the management node separately establishes a communication connection to the first network device and the second network device. The management node may obtain, through communication connections, the remaining processing capabilities of the first network device and the second network device that correspond to the BGP session. The management node determines, from the first network device and the second network device, a network device with a higher remaining processing capability. Assuming that the device with the higher remaining processing capability is the first network device, the management node sends an indication message for creating an SBFD session to the first network device, to indicate the first network device to create the SBFD session.

In a possible implementation, the first network device may create the SBFD session with the second network device in a static configuration manner, and the processing is as follows.

The first network device receives a configuration parameter that is of the SBFD session and that is statically configured for the BGP session. The configuration parameter is a parameter used by the first network device to create the SBFD session. The first network device creates the SBFD session by using the configuration parameter.

In this embodiment, the management node of the first network device provides an interaction interface, and a skilled person may statically configure the BGP session between the first network device and the second network device in the management node, and configure the configuration parameter of the SBFD session of the BGP session. The configuration parameter may include an address of the second network device during creation of the BGP session, and the address may be an internet protocol (internet protocol, IP) address of the second network device. The first network device actively creates the SBFD session with the second network device by using the address. In another possible implementation, the first network device may create the SBFD session with the second network device in a dynamic configuration manner, and the processing is as follows. The first network device obtains neighbor information of a BGP session that is dynamically created, where the neighbor information includes a configuration parameter of the SBFD session, and the configuration parameter is a parameter used by the first network device to create the SBFD session. The first network device creates the SBFD session by using the configuration parameter.

In this embodiment, after detecting that the first network device and the second network device create the BGP session, the first network device may obtain the neighbor information of the BGP session. The neighbor information of the BGP session includes an address of the second network device during creation of the BGP session, and the address may be an IP address. The first network device actively creates the SBFD session with the second network device by using the address. In this way, the SBFD session can be automatically created.

For example, the first network device includes a BGP module and an SBFD module. After the BGP module in the first network device creates the BGP session, the BGP module sends a notification message to the SBFD module in the first network device, and the notification message indicates to create the SBFD session. After receiving the notification message, the SBFD module creates the SBFD session based on content included in the notification message. The notification message includes but is not limited to the neighbor information (for example, the address of the second network device during creation of the BGP session) of the BGP session and basic SBFD parameter information such as a time interval for sending the SBFD packet, where the time interval for sending the SBFD packet may be a configured time interval. Alternatively, the SBFD module in the first network device monitors the BGP session created by the BGP module, and obtains the foregoing basic SBFD parameter information from the BGP module. For details about how the SBFD module creates the SBFD session, refer to descriptions in RFC 7880.

Optionally, the first network device may statically configure a BGP neighbor, or may dynamically discover the BGP neighbor. In this embodiment of this application, the BGP neighbor of the first network device is the second network device, and the BGP neighbor of the second network device is the first network device.

In a possible implementation, the second network device is configured with an SBFD discriminator (SBFD Discriminator), which may also be referred to as a discriminator for short. The discriminator uniquely indicates the second network device, and the second network device may be configured with only one discriminator that is used by a plurality of network devices to create SBFD sessions that correspond to BGP sessions and that are with the second network device. For example, a discriminator M is configured on the second network device, the second network device and the first network device establish a BGP session, and the second network device and a third network device establish a BGP session. The discriminator M is used by the first network device to create an SBFD session that corresponds to the BGP session and that is with the second network device, and the discriminator M is also used by the third network device to create an SBFD session that corresponds to the BGP session and that is with the second network device. In this way, as a reflector, the second network device does not need to be configured with discriminators based on a granularity of BGP neighbors, and can be configured with only one discriminator.

When the first network device sends the SBFD packet to the second network device, the SBFD packet includes the discriminator of the second network device, and the processing is as follows. The first network device obtains the discriminator of the second network device, and the first network device sends the SBFD packet including the discriminator to the second network device based on the SBFD session. The second network device performs feedback for the SBFD packet based on the discriminator that is of the second network device and that is included in the SBFD packet.

In this embodiment, the discriminator of the second network device is statically configured in the first network device. Alternatively, after generating the discriminator, the second network device notifies the discriminator of the second network device to a network device, where the network device and the second network device establish a BGP session. In this way, the first network device receives the discriminator of the second network device. Alternatively, the first network device sends an SBFD control packet to the second network device, and adds a discriminator of the first network device to the SBFD control packet. The second network device receives the SBFD control packet, adds the discriminator of the second network device to the SBFD control packet, and sends an SBFD control packet to the first network device. In this way, the first network device may obtain the discriminator of the second network device.

When sending the SBFD packet to the second network device, the first network device sends the SBFD packet including the discriminator of the second network device. After receiving the SBFD packet, the second network device identifies the discriminator that is in the SBFD packet. If the discriminator is a discriminator of the second network device, the second network device determines that the SBFD packet is an SBFD packet for which feedback is to be performed, and performs feedback for the SBFD packet; if the discriminator is not a discriminator of the second network device, the second network device discards the SBFD packet.

In addition, the first network device is also configured with a discriminator, and the discriminator uniquely indicates the first network device. When sending the SBFD packet to the second network device, the first network device adds the discriminator of the first network device and the discriminator of the second network device to the SBFD packet. For example, the discriminator of the first network device is added to a My discriminator (My discriminator) field, and the discriminator of the second network device is added to a Your discriminator (Your discriminator) field. In this way, the second network device obtains the discriminator from the Your discriminator field, and determines whether the discriminator is a discriminator of the second network device. When the second network device sends the SBFD packet to the first network device, the sent SBFD packet includes the discriminator of the first network device and the discriminator of the second network device. For example, the second network device exchanges content of the My discriminator field and the Your discriminator field in the SBFD packet sent by the first network device, to be specific, the My discriminator field in the sent SBFD packet includes the discriminator of the second network device, and the Your discriminator field includes the discriminator of the first network device. In this way, the first network device may determine, based on the discriminator of the first network device in the received SBFD packet, that the received SBFD packet is sent to the first network device. In addition, the first network device may determine, based on the discriminator of the second network device in the received SBFD packet, that the received SBFD packet is an SBFD packet sent by the second network device.

The first network device obtains the discriminator of the second network device based on the SBFD control packet, and the processing is as follows.

The first network device sends an SBFD control packet to the second network device, where the SBFD control packet includes the discriminator of the first network device, the discriminator is used as My discriminator, Your discriminator in the SBFD control packet is not filled in or is filled in a preset field, a destination address of the SBFD control packet is an address that is of a BGP neighbor and that is configured on the first network device, and a source address is an address of an outbound interface of the SBFD control packet or an address selected by the SBFD module. After receiving the SBFD control packet, the second network device exchanges the source address and the destination address that are in the SBFD packet, to be specific, the destination address is the address of the outbound interface used by the first network device to send the SBFD control packet or the address selected by the SBFD module, and the source address is the address that is of the BGP neighbor corresponding to the BGP session and that is configured on the first network device; adds the discriminator of the second network device to the SBFD packet as My discriminator; uses the discriminator of the first network device as Your discriminator; and feeds back an SBFD control packet to the first network device. In this way, the first network device obtains the discriminator of the second network device. Herein, the address that is of the BGP neighbor and that is configured on the first network device is the address of the second network device during creation of the BGP session.

In a possible implementation, after the second network device determines that the SBFD packet is the SBFD packet for which feedback is to be performed, the second network device performs the following processing.

The second network device sends, to the first network device, the SBFD packet including state information, so that the first network device determines the state of the BGP session based on the state information, where a state indicated by the state information is a current state of the second network device.

In this embodiment, the second network device obtains the current state of the second network device. The current state may be an administratively down (admin down) state, an online state, or the like. The second network device may send, to the first network device, the SBFD packet including the state information, where the state information indicates the current state of the second network device. The admin down state herein may be configured as an offline state by a management end, or may be a state in which the second network device actively disables an SBFD function when detecting that excessive current processing resources are occupied. Correspondingly, the first network device performs the following processing.

The first network device receives the SBFD packet sent by the second network device. The first network device determines the state of the BGP session based on the state information that is in the SBFD packet sent by the second network device.

In this embodiment, the first network device receives the SBFD packet sent by the second network device, and obtains, from the SBFD packet, the state information that is in the SBFD packet. If the state indicated by the state information is the online state, the first network device determines that the state of the BGP session is connected. If the state indicated by the state information is the admin down state, the first network device determines that the state of the BGP session is disconnected. In this way, the state of the BGP session may be determined based on the state information that is in the SBFD packet.

In this case, the SBFD packet may be an SBFD control packet, and the second network device may add indication information of the state of the second network device to the SBFD control packet sent by the first network device.

In another possible implementation, when the SBFD packet is an SBFD control packet, after the first network device sends the SBFD control packet to the second network device, if the first network device does not receive, within target duration, an SBFD packet sent by the second network device based on the SBFD packet, the first network device determines that the state of the BGP session is disconnected; if the first network device receives, within target duration, an SBFD packet sent by the second network device based on the SBFD packet, and if a state indicated by state information that is in the received SBFD packet is an admin down state, the first network device determines that the state of the BGP session is disconnected, or if a state indicated by state information that is in the received SBFD packet is an online state, the first network device determines that the state of the BGP session is connected. The target duration herein is described below.

In another possible implementation, after the second network device receives the SBFD packet sent by the first network device, processing in step 602 is as follows.

The second network device loops back an SBFD packet to the first network device.

In this embodiment, after receiving the SBFD packet sent by the first network device, the second network device may loop back the SBFD packet to the first network device. If a physical link between the second network device and the first network device is normal, the SBFD packet looped back may reach the first network device. If a physical link between the first network device and the second network device is disconnected, the second network device feeds back the SBFD packet, but the SBFD packet cannot reach the first network device. Herein, "loop back" indicates that the second network device sends the SBFD packet sent by the first network device to the first network device.

Correspondingly, in step 503, the first network device may perform the following processing.

If the first network device does not receive, within target duration, the SBFD packet looped back by the second network device based on the SBFD packet, the first network device determines that the state of the BGP session is disconnected; if the first network device receives, within target duration, the SBFD packet looped back by the second network device based on the SBFD packet, the first network device determines that the state of the BGP session is connected.

The target duration may be preset and stored in the first network device. Optionally, the first network device periodically sends the SBFD packet, and the target duration may be duration of n periodicities, where n is a positive integer. For example, n may be 1, 2, or the like. Certainly, the target duration may alternatively be of a fixed value. For example, the target duration is twice as much duration of transmission from the first network device to the second network device.

In this embodiment, when sending the SBFD packet to the second network device, the first network device starts timing. If the first network device has not received, when timing duration reaches the target duration, the SBFD packet looped back by the second network device, the first network device may determine that the state of the BGP session is disconnected. For example, a timer may be set in the first network device, and the timer may be used for timing. If the first network device has received, before the target duration is reached, the SBFD packet looped back by the second network device, the first network device may determine that the state of the BGP session is connected.

In this case, the SBFD packet may be an SBFD echo packet.

It should be noted herein that, after the second network device receives the SBFD packet sent by the first network device, if the state of the second network device is administratively down, it indicates that an SBFD function of the second network device is disabled, and the second network device does not loop back the SBFD packet to the first network device. In this way, the first network device does not receive, within the target duration, the SBFD packet looped back by the second network device, and the first network device may determine that the state of the BGP session is disconnected.

In another possible implementation, the first network device sends N SBFD packets to the second network device, and the first network device may determine the state of the BGP session based on a quantity of SBFD packets fed back by the second network device. The processing is as follows. If the quantity of SBFD packets that are received by the first network device and that are looped back by the second network device based on the N SBFD packets is less than M, the first network device determines that the state of the BGP session is disconnected; if the quantity of SBFD packets that are received by the first network device and that are looped back by the second network device based on the N SBFD packets is greater than or equal to M, the first network device determines that the state of the BGP session is connected.

M is less than or equal to N, and both M and N are positive integers. For example, N is 10, and M is 6.

In this embodiment, the first network device sends the N SBFD packets to the second network device within a period of time. Normally, the second network device loops back each SBFD packet. The first network device may determine the quantity of SBFD packets that are looped back and that are in the N SBFD packets. If the quantity is less than M, the first network device may determine that the state of the BGP session is disconnected. If the quantity is greater than or equal to M, the first network device may determine that the state of the BGP session is connected. In this way, the state of the BGP session can be determined based on the quantity of received SBFD packets.

In this case, the SBFD packet may be an SBFD echo packet.

In another possible implementation, after receiving the SBFD packet sent by the first network device, if the state of the second network device is online, the second network device may loop back an SBFD packet to the first network device; if the state of the second network device is an admin down state, the second device does not loop back an SBFD packet to the first network device. In this way, the first network device may accurately determine the state of the BGP session depending on whether the first network device receives the SBFD packet looped back by the second network device. In this case, the SBFD packet may be an SBFD echo packet.

FIG. 9 provides a schematic diagram in which the first network device sends an SBFD echo packet to the second network device, and the second network device loops back an SBFD echo packet to the first network device.

For example, the first network device includes a BGP module and an SBFD module. When the SBFD module in the first network device determines that the state of the BGP session is disconnected, the SBFD module sends, to the BGP module, an indication message that the BGP session is disconnected. When the BGP module receives the indication message that the BGP session is disconnected, the BGP module determines that the state of the BGP session is disconnected, and performs convergence processing on a BGP route. In this way, because SBFD detection is millisecond-level detection, the BGP module can know the state of the BGP session in a timely manner, and further can quickly perform BGP route convergence.

In embodiments of this application, a case in which the second network device does not loop back the SBFD to the first network device may include but is not limited to: 1. The physical link between the first network device and the second network device is disconnected, and the SBFD packet sent by the first network device to the second network device cannot reach the second network device. The second network device does not receive the SBFD packet, and therefore cannot feed back the SBFD packet. 2. Although the second network device receives the SBFD packet sent by the first network device, the physical link between the first network device and the second network device is disconnected in a process in which the second network device loops back the SBFD packet, and the first network device does not receive the SBFD packet looped back by the second network device. 3. The SBFD function of the second network device is disabled.

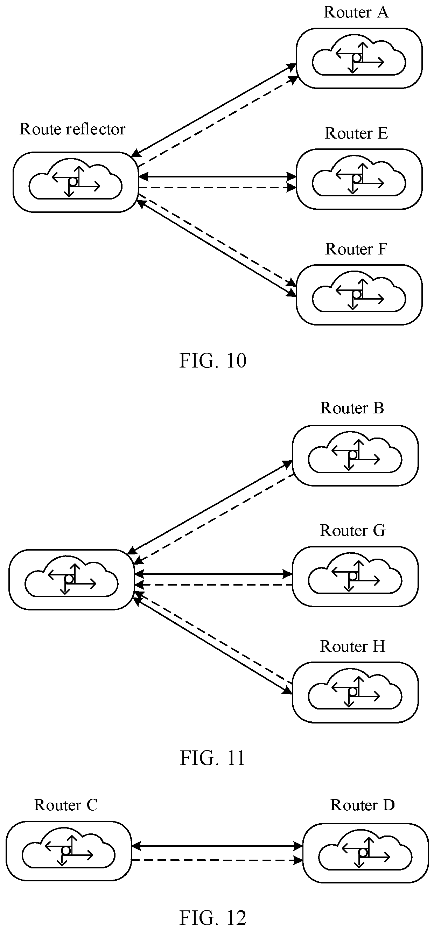

In an example, when the method for detecting a state of a BGP session is applied to a scenario in which an RR exists, the first network device is an RR, and the second network device is a router. For example, as shown in FIG. 10, the first network device is the RR, and the second network device is a router A. After the RR and the router A create a BGP session, the RR initiates creation of an SBFD session that corresponds to the BGP session and that is with the router A. In addition, in FIG. 10, SBFD sessions created by the RR with router E and router F besides router A are also shown. In this way, after the RR and a plurality of routers create BGP sessions, content required for creating an SBFD session only needs to be configured on the RR, and does not need to be separately configured on each router, where the router and the RR create the BGP session. Therefore, a configuration amount can be reduced.

In an example, when the method for detecting a state of a BGP session is applied to a scenario in which an RR exists, the first network device is a router, and the second network device is an RR. For example, as shown in FIG. 11, the first network device is a router B, and the second network device is the RR. After the router B and the RR create a BGP session, the router B initiates creation of an SBFD session that corresponds to the BGP session and that is with the RR. In addition, in FIG. 11, SBFD sessions that router G and router H separately initiate creating with the RR are also shown.

In this way, when the method for detecting a state of a BGP session is applied to the scenario in which an RR exists, when a processing capability of the RR is poor, because a router of a BGP session established by the router and the RR can be set as an initiator, and the RR can be set as a reflector, where the reflector does not need to create an SBFD session, pressure on the RR can be reduced even if there are many BGP sessions of the RR. When a processing capability of the RR is strong, and a processing capability of a router of a BPG session established by the router and the RR is poor, because the RR can be set as the initiator, and the router of the BPG session established by the router and the RR can be set as the reflector, pressure on the router of the BPG session established by the router and the RR can be reduced. The router of the BPG session established by the router and the RR can also be called an RR client. In addition, in the RR scenario, configuration does not need to be performed on both the initiator and reflector, and is modified on only the initiator. A dependency relationship is weak and deployment flexibility is high.

In an example, the first network device is a router, and the second network device is a router. For example, as shown in FIG. 12, the first network device is a router C, and the second network device is a router D. After the router C and the router D create a BGP session, the router C initiates creation of an SBFD session that corresponds to the BGP session and that is with the router D. In FIG. 12, the router C initiates creation of the SBFD session that corresponds to the BGP session and that is with the router. Certainly, the router D may alternatively initiate creation of an SBFD session that corresponds to the BGP session and that is with the router C.

In this way, when the method for detecting a state of a BGP session is applied to a scenario in which no RR exists, only one of routers corresponding to a BGP session serves as an initiator to initiate creation of an SBFD session with the other router, and configuration does not need to be performed on both the two routers corresponding to the BGP session. Therefore, resources occupied by SBFD can be reduced. In addition, in the non-RR scenario, configuration does not need to be performed on both the initiator and reflector, and is modified on only the initiator. A dependency relationship is weak and deployment flexibility is high.

It should be noted that, in FIG. 10 to FIG. 12, a double-arrow solid line indicates a created BGP session, a single-arrow dashed line indicates a created SBFD session, and an arrow direction of the single-arrow dashed line points from an initiator to a reflector.

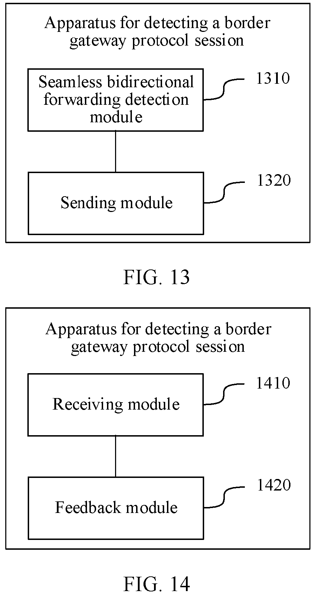

In embodiments of this application, because the reflector only needs to feed back an SBFD packet and does not need to create an SBFD session, content required for creating the SBFD session is configured on only the initiator, and does not need to be configured on the reflector. Therefore, the configuration content can be reduced. In addition, because only the initiator creates the SBFD session, a processing resource is occupied by only the initiator, and processing resources do not need to be occupied by both the initiator and the reflector, thereby reducing processing resource overheads of a network device. In addition, because only the initiator creates the SBFD session, a function of creating an SBFD session is deployed on only the initiator, and does not need to be deployed on both the initiator and the reflector, thereby reducing dependency between the devices. FIG. 13 is a diagram of a structure of an apparatus for detecting a state of a BGP session according to an embodiment of this application. The apparatus is used in a first network device, and the first network device and a second network device have a BGP neighbor relationship. The apparatus provided in this embodiment of this application can implement the procedure shown in FIG. 5 in an embodiment of this application. The apparatus includes an SBFD module 1310 and a sending module 1320.

The SBFD module 1310 is configured to create a seamless bidirectional forwarding detection SBFD session, where the SBFD session is an SBFD session corresponding to a BGP session between the first network device and the second network device, the first network device is an initiator of the SBFD session, the second network device is a reflector of the SBFD session, and the BGP session is a session created based on the BGP neighbor relationship; and may be specifically configured to implement a creation function in step 501 and perform an implicit step included in step 501.

The sending module 1320 is configured to send an SBFD packet to the second network device based on the SBFD session, and may be specifically configured to implement a sending function in step 502 and perform an implicit step included in step 502.

The SBFD module 1310 is further configured to determine a state of the BGP session based on a state of feedback by the second network device for the SBFD packet, and may be specifically configured to implement a detection function in step 503 and perform an implicit step included in step 503.

In a possible implementation, the first network device is a route reflector RR, and the second network device is a router;
the first network device is a router, and the second network device is an RR; or
both the first network device and the second network device are routers.

In a possible implementation, a remaining processing capability of the first network device is not lower than a remaining processing capability of the second network device.

In a possible implementation, the SBFD module 1310 is further configured to:
receive a configuration parameter that is of the SBFD session and that is statically configured for the BGP session; or
obtain neighbor information of the BGP session that is dynamically created, where the neighbor information includes a configuration parameter of the SBFD session, and the configuration parameter is a parameter used by the first network device to create the SBFD session. The SBFD module 1310 is configured to:
create the SBFD session based on the configuration parameter.

In a possible implementation, the SBFD module 1310 is further configured to:
receive an SBFD packet sent by the second network device; and
determine the state of the BGP session based on state information that is in the SBFD packet sent by the second network device.

In a possible implementation, the SBFD module 1310 is further configured to:
if the first network device does not receive, within target duration, an SBFD packet looped back by the second network device based on the SBFD packet, determine that the state of the BGP session is disconnected; or
if the first network device receives, within target duration, an SBFD packet looped back by the second network device based on the SBFD packet, determine that the state of the BGP session is connected.

In a possible implementation, the SBFD module 1310 is configured to:
send N SBFD packets to the second network device based on the SBFD session.

The SBFD module 1310 is further configured to:
if a quantity of SBFD packets that are received by the first network device and that are looped back by the second network device based on the N SBFD packets is less than M, determine that the state of the BGP session is disconnected; or if a quantity of SBFD packets that are received by the first network device and that are looped back by the second network device based on the N SBFD packets is greater than or equal to M, determine that the state of the BGP session is connected, where M is less than or equal to N, and both M and N are positive integers.

In a possible implementation, the SBFD module 1310 is further configured to:
obtain a discriminator of the second network device.

The sending module 1320 is configured to:
send, based on the SBFD session, the SBFD packet including the discriminator to the second network device.

The module division in FIG. 13 in this embodiment of this application is an example, and is merely logical function division. In actual implementation, there may also be another division manner. In addition, functional modules in embodiments of this application may be integrated into a processor of the first network device shown in FIG. 1 or FIG. 2, or may exist independently in the first network device shown in FIG. 1 or FIG. 2, or two or more modules may be integrated into one module. The integrated module may be implemented in a form of hardware, or may be implemented in a form of a software functional module.

FIG. 14 is a diagram of a structure of an apparatus for detecting a state of a BGP session according to an embodiment of this application. The apparatus is used in a second network device, and a first network device and the second network device have a BGP neighbor relationship. The apparatus provided in this embodiment of this application can implement the procedure shown in FIG. 6 in an embodiment of this application. The apparatus includes a receiving module 1410 and a feedback module 1420.

The receiving module 1410 is configured to receive an SBFD packet sent by the first network device based on an SBFD session, where the SBFD session is an SBFD session created by the first network device and is an SBFD session corresponding to a BGP session between the first network device and the second network device, the first network device is an initiator of the SBFD session, the second network device is a reflector of the SBFD session, and the BGP session is a session created based on the BGP neighbor relationship; and may be specifically configured to implement a receiving function in step 601 and perform an implicit step included in step 601.

The feedback module 1420 is configured to perform feedback for the SBFD packet, so that the first network device determines a state of the BGP session based on a state of feedback by the second network device for the SBFD packet; and may be specifically configured to implement a feedback function in step 602 and perform an implicit step included in step 602.

In a possible implementation, a remaining processing capability of the first network device is not lower than a remaining processing capability of the second network device.

In a possible implementation, the feedback module 1420 is configured to:
send, to the first network device, an SBFD packet including state information, so that the first network device determines the state of the BGP session based on the state information, where a state indicated by the state information is a current state of the second network device. In a possible implementation, the feedback module 1420 is configured to:
loop back an SBFD packet to the first network device.

In a possible implementation, the SBFD packet includes a discriminator of the second network device.

The feedback module 1420 is configured to:
perform feedback for the SBFD packet based on the discriminator that is of the second network device and that is included in the SBFD packet.

The module division in FIG. 14 in this embodiment of this application is an example, and is merely logical function division. In actual implementation, there may also be another division manner. In addition, functional modules in embodiments of this application may be integrated into a processor of the second network device shown in FIG. 3 or FIG. 4, or may exist independently in the second network device shown in FIG. 3 or FIG. 4, or two or more modules may be integrated into one module. The integrated module may be implemented in a form of hardware, or may be implemented in a form of a software functional module.

All or some of the foregoing embodiments may be implemented by using software, hardware, firmware, or any combination thereof. When software is used for implementation, all or some of embodiments may be implemented in a form of a computer program product. The computer program product includes one or more computer instructions. When the computer program instructions are loaded and executed on a network device, all or some of the procedures or functions according to embodiments of this application are generated. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by a network device, or a data storage device, such as a server or a data center, integrating one or more usable media. The usable medium may be a magnetic medium (for example, a floppy disk, a hard disk, or a magnetic tape), or may be an optical medium (such as a digital video disk (digital video disk, DVD)) or semiconductor media (such as a solid-state drive).

## Claims

1. A method for detecting a state of a border gateway protocol, BGP, session, wherein the method is applied to a first network device (100), the first network device (100) and a second network device (300) have a BGP neighbor relationship, and the method comprises the steps of :
creating (S501), by the first network device (100), a seamless bidirectional forwarding detection SBFD session, wherein the SBFD session is an SBFD session corresponding to a BGP session between the first network device (100) and the second network device (300), the first network device (100) is an initiator of the SBFD session, the second network device (300) is a reflector of the SBFD session, and the BGP session is a session created based on the BGP neighbor relationship;
sending (S502), by the first network device (100), an SBFD packet to the second network device (300) based on the SBFD session; and
determining (S503), by the first network device (100), a state of the BGP session based on a state of feedback by the second network device (300) for the SBFD packet, wherein a remaining processing capability of the first network device (100) is not lower than a remaining processing capability of the second network device (300), and wherein the method further comprises the steps of :
receiving, by the first network device (100), a configuration parameter that is of the SBFD session and that is statically configured for the BGP session; or
obtaining, by the first network device (100), neighbor information of the BGP session that is dynamically created, wherein the neighbor information comprises a configuration parameter of the SBFD session, and the configuration parameter is a parameter used by the first network device (100) to create the SBFD session; and
the creating, by the first network device (100), an SBFD session comprises:
creating, by the first network device (100), the SBFD session based on the configuration parameter.

2. The method according to claim 1, wherein the first network device (100) is a route reflector RR, and the second network device (300) is a router;
the first network device (100) is a router, and the second network device (300) is an RR; or
both the first network device (100) and the second network device (300) are routers.

3. The method according to any one of claims 1 or 2, wherein the the step of determining, by the first
network device (100), a state of the BGP session based on a state of feedback by the second network device (300) for the SBFD packet comprises the steps of:
receiving, by the first network device (100), an SBFD packet sent by the second network device (300); and
determining, by the first network device (100), the state of the BGP session based on state information that is in the SBFD packet sent by the second network device (300).

4. The method according to any one of claims 1 to 2, wherein the step of determining, by the first network device (100), a state of the BGP session based on a state of feedback by the second network device (300) for the SBFD packet further comprises:
if the first network device (100) does not receive, within target duration, an SBFD packet looped back by the second network device (300) based on the SBFD packet, a step of determining that the
state of the BGP session is disconnected; or
if the first network device (100) receives, within target duration, an SBFD packet looped back by the second network device (300) based on the SBFD packet, a step of determining that the state of the
BGP session is connected.

5. The method according to any one of claims 1 to 2, wherein the step of sending, by the first network device (100), an SBFD packet to the second network device (300) based on the SBFD session comprises a step of sending, by the first network device (100), N SBFD packets to the second network device (300) based on the SBFD session; and the the step of determining, by the first network device (100), a state of the BGP session based on a state of feedback by the second network device (300) for the SBFD packet comprises:
if a quantity of SBFD packets that are received by the first network device (100) and that are looped back by the second network device (300) based on the N SBFD packets is less than M, a step of determining that the state of the BGP session is disconnected; or
if a quantity of SBFD packets that are received by the first network device (100) and that are looped back by the second network device (300) based on the N SBFD packets is greater than or equal to M, a step of
determining that the state of the BGP session is connected, wherein M is less than or equal to N, and both M and N are positive integers.

6. The method according to any one of claims 1 to 5, wherein the method further comprises a step of
obtaining, by the first network device (100), a discriminator of the second network device (300); and,
wherein, the step of sending, by the first network device (100), an SBFD packet to the second network device (300) based on the SBFD session comprises a step of
sending, by the first network device (100) based on the SBFD session, the SBFD packet comprising the discriminator to the second network device (300).

7. The method according to any one of claims 1 to 6, wherein the method further comprises the steps of :
receiving (S601), by the second network device (300), the seamless bidirectional forwarding detection SBFD packet sent by the first network device (100) based on the SBFD session,
performing (S602), by the second network device (300), feedback for the SBFD packet, so that the first network device (100) determines a state of the BGP session based on a state of feedback by the second network device (300) for the SBFD packet.

8. The method according to claim 7, wherein the step of performing, by the second network device (300), feedback for the SBFD packet comprises a step of:
sending, by the second network device (300) to the first network device (100), an SBFD packet comprising state information, so that the first network device (100) determines the state of the BGP session based on the state information, wherein a state indicated by the state information is a current state of the second network device (300).

9. The method according to claim 7, wherein the step of performing, by the second network device (300), feedback for the SBFD packet comprises a step of looping back, by the second network device (300), an SBFD packet to the first network device (100).

10. The method according to any one of claims 7 to 9, wherein the SBFD packet received by the second network device (300) comprises a discriminator of the second network device (300); and the wherein, the step of performing, by the second network device (300), feedback for the SBFD packet comprises a step of
performing, by the second network device (300), feedback for the SBFD packet based on the discriminator that is of the second network device (300) and that is comprised in the SBFD packet.

11. A network device configured to implement the method according to any one of claims 1 to 10.

12. A network system, wherein the network system comprises a first network device (100) and a second network device (300), wherein the first network device (100) is configured to implement the method according to any one of claims 1 to 10.

## Patentansprüche

1. Verfahren zum Erkennen eines Zustands einer Border-Gateway-Protocol(BGP)-Sitzung, wobei das Verfahren auf eine erste Netzwerkvorrichtung (100) angewendet wird, die erste Netzwerkvorrichtung (100) und eine zweite Netzwerkvorrichtung (300) eine BGP-Nachbarbeziehung aufweisen, und das Verfahren die folgenden Schritte umfasst:
Erstellen (S501), durch die erste Netzwerkvorrichtung (100), einer Seamless-Bidirectional-Forwarding-Detection(SBFD)-Sitzung, wobei die SBFD-Sitzung eine SBFD-Sitzung ist, die einer BGP-Sitzung zwischen der ersten Netzwerkvorrichtung (100) und der zweiten Netzwerkvorrichtung (300) entspricht, die erste Netzwerkvorrichtung (100) ein Initiator der SBFD-Sitzung ist,
die zweite Netzwerkvorrichtung (300) ein Reflector der SBFD-Sitzung ist und die BGP-Sitzung eine Sitzung ist, die basierend auf der BGP-Nachbarbeziehung erstellt wird;
Senden (S502) eines SBFD-Pakets an die zweite Netzwerkvorrichtung (300) durch die erste Netzwerkvorrichtung (100) basierend auf der SBFD-Sitzung; und
Bestimmen (S503), durch die erste Netzwerkvorrichtung (100), eines Zustands der BGP-Sitzung basierend auf einem Zustand einer Rückmeldung durch die zweite Netzwerkvorrichtung (300) für das SBFD-Paket, wobei ein verbleibendes Verarbeitungsvermögen der ersten Netzwerkvorrichtung (100) nicht geringer ist als ein verbleibendes Verarbeitungsvermögen der zweiten Netzwerkvorrichtung (300), und wobei das Verfahren ferner die folgenden Schritte umfasst:
Empfangen, durch die erste Netzwerkvorrichtung (100), eines Konfigurationsparameters, der zu der SBFD-Sitzung gehört und der statisch für die BGP-Sitzung konfiguriert ist; oder
Erlangen, durch die erste Netzwerkvorrichtung (100), von Nachbarinformationen der BGP-Sitzung, die dynamisch erstellt werden, wobei die Nachbarinformationen einen Konfigurationsparameter der SBFD-Sitzung umfassen und der Konfigurationsparameter ein Parameter ist, der durch die erste Netzwerkvorrichtung (100) verwendet wird, um die SBFD-Sitzung zu erstellen; und
das Erstellen, durch die erste Netzwerkvorrichtung (100), einer SBFD-Sitzung Folgendes umfasst:
Erstellen der SBFD-Sitzung durch die erste Netzwerkvorrichtung (100) basierend auf dem Konfigurationsparameter.

2. Verfahren nach Anspruch 1, wobei die erste Netzwerkvorrichtung (100) ein Route Reflector RR ist und die zweite Netzwerkvorrichtung (300) ein Router ist;
die erste Netzwerkvorrichtung (100) ein Router und die zweite Netzwerkvorrichtung (300) ein RR ist; oder
sowohl die erste Netzwerkvorrichtung (100) als auch die zweite Netzwerkvorrichtung (300) Router sind.

3. Verfahren nach einem der Ansprüche 1 oder 2, wobei der der Schritt des Bestimmens, durch die erste Netzwerkvorrichtung (100), eines Zustands der BGP-Sitzung basierend auf einem Zustand einer Rückmeldung durch die zweite Netzwerkvorrichtung (300) für das SBFD-Paket die folgenden Schritte umfasst:
Empfangen, durch die erste Netzwerkvorrichtung (100), eines SBFD-Pakets, das durch die zweite Netzwerkvorrichtung (300) gesendet wird; und
Bestimmen, durch die erste Netzwerkvorrichtung (100), des Zustands der BGP-Sitzung basierend auf Zustandsinformationen,
die in dem SBFD-Paket sind, das durch die zweite Netzwerkvorrichtung (300) gesendet wird.

4. Verfahren nach einem der Ansprüche 1 bis 2, wobei der der Schritt des Bestimmens, durch die erste Netzwerkvorrichtung (100), eines Zustands der BGP-Sitzung basierend auf einem Zustand einer Rückmeldung durch die zweite Netzwerkvorrichtung (300) für das SBFD-Paket ferner Folgendes umfasst:
falls die erste Netzwerkvorrichtung (100) nicht innerhalb einer Zieldauer ein SBFD-Paket empfängt, das durch die zweite Netzwerkvorrichtung (300) basierend auf dem SBFD-Paket zurückgeschleift wird, einen Schritt eines Bestimmens, dass der Zustand der BGP-Sitzung getrennt ist; oder
falls die erste Netzwerkvorrichtung (100) innerhalb einer Zieldauer ein SBFD-Paket empfängt, das durch die zweite Netzwerkvorrichtung (300) basierend auf dem SBFD-Paket zurückgeschleift wird, einen Schritt eines Bestimmens, dass der Zustand der BGP-Sitzung verbunden ist.

5. Verfahren nach einem der Ansprüche 1 bis 2, wobei der Schritt des Sendens, durch die erste Netzwerkvorrichtung (100), eines SBFD-Pakets an die zweite Netzwerkvorrichtung (300) basierend auf der SBFD-Sitzung einen Schritt
eines Sendens von N SBFD-Paketen an die zweite Netzwerkvorrichtung (300) durch die erste Netzwerkvorrichtung (100) basierend auf der SBFD-Sitzung umfasst; und
der der Schritt des Bestimmens, durch die erste Netzwerkvorrichtung (100), eines Zustands der BGP-Sitzung basierend auf einem Zustand einer Rückmeldung durch die zweite Netzwerkvorrichtung (300) für das SBFD-Paket ferner Folgendes umfasst:
falls eine Menge von SBFD-Paketen, die durch die erste Netzwerkvorrichtung (100) empfangen werden und die durch die zweite Netzwerkvorrichtung (300) zurückgeschleift werden,
basierend auf den N SBFD-Paketen, kleiner als M ist, einen Schritt eines Bestimmens, dass der Zustand der BGP-Sitzung getrennt ist; oder
falls eine Menge von SBFD-Paketen, die durch die erste Netzwerkvorrichtung (100) empfangen werden und die durch die zweite Netzwerkvorrichtung (300) zurückgeschleift werden, basierend auf den N SBFD-Paketen, größer oder gleich M ist, einen Schritt eines Bestimmens, dass der Zustand der BGP-Sitzung verbunden ist, wobei M kleiner oder gleich N ist, und sowohl M als auch N positive ganze Zahlen sind.

6. Verfahren nach einem der Ansprüche 1 bis 5, wobei das Verfahren ferner einen Schritt eines
Erlangens, durch die erste Netzwerkvorrichtung (100), eines Diskriminators der zweiten Netzwerkvorrichtung (300) umfasst; und,
wobei, der Schritt des Sendens, durch die erste Netzwerkvorrichtung (100), eines SBFD-Pakets an die zweite Netzwerkvorrichtung (300) basierend auf der SBFD-Sitzung einen Schritt eines
Sendens, durch die erste Netzwerkvorrichtung (100) basierend auf der SBFD-Sitzung, des SBFD-Pakets, das den Diskriminator umfasst, an die zweite Netzwerkvorrichtung (300) umfasst.

7. Verfahren nach einem der Ansprüche 1 bis 6, wobei das Verfahren ferner die folgenden Schritte umfasst:
Empfangen (S601) des Seamless-Bidirectional-Forwarding-Detection(SBFD)-Paketes, das durch die erste Netzwerkvorrichtung (100) basierend auf der SBFD-Sitzung gesendet wird, durch die zweite Netzwerkvorrichtung (300),
Durchführen (S602), durch die zweite Netzwerkvorrichtung (300), einer Rückmeldung für das SBFD-Paket, sodass die erste Netzwerkvorrichtung (100) einen Zustand der BGP-Sitzung basierend auf einem Zustand einer Rückmeldung durch die zweite Netzwerkvorrichtung (300) für das SBFD-Paket bestimmt.

8. Verfahren nach Anspruch 7, wobei der Schritt des Durchführens einer Rückmeldung für das SBFD-Paket durch die zweite Netzwerkvorrichtung (300) einen folgenden Schritt umfasst:
Senden, durch die zweite Netzwerkvorrichtung (300), an die erste Netzwerkvorrichtung (100), eines SBFD-Pakets, das Zustandsinformationen umfasst, sodass die erste Netzwerkvorrichtung (100) den Zustand der BGP-Sitzung basierend auf den Zustandsinformationen bestimmt, wobei ein Zustand, der durch die Zustandsinformationen angegeben wird, ein aktueller Zustand der zweiten Netzwerkvorrichtung (300) ist.

9. Verfahren nach Anspruch 7, wobei der Schritt des Durchführens einer Rückmeldung für das SBFD-Paket durch die zweite Netzwerkvorrichtung (300) einen folgenden Schritt umfasst:
Zurückschleifen eines SBFD-Pakets durch die zweite Netzwerkvorrichtung (300) zu der ersten Netzwerkvorrichtung (100).

10. Verfahren nach einem der Ansprüche 7 bis 9, wobei das durch die zweite Netzwerkvorrichtung (300) empfangene SBFD-Paket einen Diskriminator der zweiten Netzwerkvorrichtung (300) umfasst; und der wobei der Schritt des Durchführens einer Rückmeldung für das SBFD-Paket durch die zweite Netzwerkvorrichtung (300) einen Schritt eines
Durchführens, durch die zweite Netzwerkvorrichtung (300), einer Rückmeldung für das SBFD-Paket basierend auf dem Diskriminator umfasst, der zu der zweiten Netzwerkvorrichtung (300) gehört und der in dem SBFD-Paket umfasst ist.

11. Netzwerkvorrichtung, die dazu konfiguriert ist, das Verfahren nach einem der Ansprüche 1 bis 10 zu implementieren.

12. Netzwerksystem, wobei das Netzwerksystem eine erste Netzwerkvorrichtung (100) und eine zweite Netzwerkvorrichtung (300) umfasst, wobei die erste Netzwerkvorrichtung (100) dazu konfiguriert ist, das Verfahren nach einem der Ansprüche 1 bis 10 zu implementieren.

## Revendications

1. Procédé de détection d'un état d'une session de protocole de passerelle frontière, BGP, dans lequel le procédé est appliqué à un premier dispositif de réseau (100), le premier dispositif de réseau (100) et un second dispositif de réseau (300) ont une relation de voisinage BGP, et le procédé comprend les étapes suivantes :
la création (S501), par le premier dispositif de réseau (100), d'une session de détection de transfert bidirectionnel transparent, SBFD, dans lequel la session SBFD est une session SBFD correspondant à une session BGP entre le premier dispositif de réseau (100) et le second dispositif de réseau (300), le premier dispositif de réseau (100) est un initiateur de la session SBFD, le second dispositif de réseau (300) est un réflecteur de la session SBFD, et la session BGP est une session créée sur la base de la relation de voisinage BGP ;
l'envoi (S502), par le premier dispositif de réseau (100), d'un paquet SBFD au second dispositif de réseau (300) sur la base de la session SBFD ; et
la détermination (S503), par le premier dispositif de réseau (100), d'un état de la session BGP sur la base d'un état de rétroaction par le second dispositif de réseau (300) pour le paquet SBFD, dans lequel une capacité de traitement restante du premier dispositif de réseau (100) n'est pas inférieure à une capacité de traitement restante du second dispositif de réseau (300), et dans lequel le procédé comprend également les étapes suivantes :
la réception, par le premier dispositif de réseau (100), d'un paramètre de configuration qui est de la session SBFD et qui est configuré de manière statique pour la session BGP ; ou
l'obtention, par le premier dispositif de réseau (100), d'informations de voisinage de la session BGP qui est créée dynamiquement, dans lequel les informations de voisinage comprennent un paramètre de configuration de la session SBFD,
et le paramètre de configuration est un paramètre utilisé par le premier dispositif de réseau (100) pour créer la session SBFD ; et
la création, par le premier dispositif de réseau (100), d'une session SBFD comprend :
la création, par le premier dispositif de réseau (100), de la session SBFD sur la base du paramètre de configuration.

2. Procédé selon la revendication 1, dans lequel le premier dispositif de réseau (100) est un réflecteur de route RR, et le second dispositif de réseau (300) est un routeur ;
le premier dispositif de réseau (100) est un routeur, et le second dispositif de réseau (300) est un RR ; ou
le premier dispositif de réseau (100) et le second dispositif de réseau (300) sont tous deux des routeurs.

3. Procédé selon l'une quelconque des revendications 1 ou 2, dans lequel l'étape de détermination, par le premier dispositif de réseau (100), d'un état de la session BGP sur la base d'un état de rétroaction par le second dispositif de réseau (300) pour le paquet SBFD comprend les étapes suivantes :
la réception, par le premier dispositif de réseau (100), d'un paquet SBFD envoyé par le second dispositif de réseau (300) ; et
la détermination, par le premier dispositif de réseau (100), de l'état de la session BGP sur la base d'informations d'état qui se trouvent dans le paquet SBFD envoyé par le second dispositif de réseau (300).

4. Procédé selon l'une quelconque des revendications 1 à 2, dans lequel l'étape de détermination, par le premier dispositif de réseau (100), d'un état de la session BGP sur la base d'un état de rétroaction par le second dispositif de réseau (300) pour le paquet SBFD comprend également :
si le premier dispositif de réseau (100) ne reçoit pas, dans le délai cible, un paquet SBFD renvoyé en boucle par le second dispositif de réseau (300) sur la base du paquet SBFD, une étape de détermination que l'état de la session BGP est déconnecté ; ou
si le premier dispositif de réseau (100) reçoit, dans le délai cible, un paquet SBFD renvoyé en boucle par le second dispositif de réseau (300) sur la base du paquet SBFD, une étape de détermination que l'état de la session BGP est connecté.

5. Procédé selon l'une quelconque des revendications 1 à 2, dans lequel l'étape d'envoi, par le premier dispositif de réseau (100), d'un paquet SBFD au second dispositif de réseau (300) sur la base de la session SBFD comprend une étape
d'envoi, par le premier dispositif de réseau (100), de N paquets SBFD au second dispositif de réseau (300) sur la base de la session SBFD ; et
l'étape de détermination, par le premier dispositif de réseau (100), d'un état de la session BGP sur la base d'un état de rétroaction par le second dispositif de réseau (300) pour le paquet SBFD comprend :
si une quantité de paquets SBFD qui sont reçus par le premier dispositif de réseau (100) et qui sont renvoyés en boucle par le second dispositif de réseau (300) sur la base des N paquets SBFD est inférieure à M, une étape de détermination que l'état de la session BGP est déconnecté ; ou
si une quantité de paquets SBFD qui sont reçus par le premier dispositif de réseau (100) et qui sont renvoyés en boucle par le second dispositif de réseau (300) sur la base des N paquets SBFD est supérieure ou égale à M, une étape de détermination que l'état de la session BGP est connecté, dans lequel M est inférieur ou égal à N, et M et N sont tous deux des entiers positifs.

6. Procédé selon l'une quelconque des revendications 1 à 5, dans lequel le procédé comprend également une étape
d'obtention, par le premier dispositif de réseau (100), d'un discriminateur du second dispositif de réseau (300) ; et
dans lequel, l'étape d'envoi, par le premier dispositif de réseau (100), d'un paquet SBFD au second dispositif de réseau (300) sur la base de la session SBFD comprend une étape d'envoi, par le premier dispositif de réseau (100) sur la base de la session SBFD, du paquet SBFD comprenant le discriminateur au second dispositif de réseau (300).

7. Procédé selon l'une quelconque des revendications 1 à 6, dans lequel le procédé comprend également les étapes suivantes :
la réception (S601), par le second dispositif de réseau (300), du paquet de détection de transfert bidirectionnel transparent, SBFD, envoyé par le premier dispositif de réseau (100) sur la base de la session SBFD,
l'exécution (S602), par le second dispositif de réseau (300), d'une rétroaction pour le paquet SBFD, de sorte que le premier dispositif de réseau (100) détermine un état de la session BGP sur la base d'un état de rétroaction par le second dispositif de réseau (300) pour le paquet SBFD.

8. Procédé selon la revendication 7, dans lequel l'étape d'exécution, par le second dispositif de réseau (300), d'une rétroaction pour le paquet SBFD comprend une étape :
d'envoi, par le second dispositif de réseau (300) au premier dispositif de réseau (100), d'un paquet SBFD comprenant des informations d'état, de sorte que le premier dispositif de réseau (100) détermine l'état de la session BGP sur la base des informations d'état, dans lequel un état indiqué par les informations d'état est un état actuel du second dispositif de réseau (300).

9. Procédé selon la revendication 7, dans lequel l'étape d'exécution, par le second dispositif de réseau (300), d'une rétroaction pour le paquet SBFD comprend une étape de renvoi en boucle, par le second dispositif de réseau (300), d'un paquet SBFD vers le premier dispositif de réseau (100).

10. Procédé selon l'une quelconque des revendications 7 à 9, dans lequel le paquet SBFD reçu par le second dispositif de réseau (300) comprend un discriminateur du second dispositif de réseau (300) ; et
dans lequel, l'étape d'exécution, par le second dispositif de réseau (300), d'une rétroaction pour le paquet SBFD comprend une étape
d'exécution, par le second dispositif de réseau (300), d'une rétroaction pour le paquet SBFD sur la base du discriminateur qui est du second dispositif de réseau (300) et qui est compris dans le paquet SBFD.

11. Dispositif de réseau configuré pour mettre en œuvre le procédé selon l'une quelconque des revendications 1 à 10.

12. Système de réseau, dans lequel le système de réseau comprend un premier dispositif de réseau (100) et un second dispositif de réseau (300), dans lequel le premier dispositif de réseau (100) est configuré pour mettre en œuvre le procédé selon l'une quelconque des revendications 1 à 10.
